(19)

Europäisches
Patentamt
European
Patent Office
Office européen
des brevets

(11) **EP 2 530 819 A1**

(12) **EUROPEAN PATENT APPLICATION**
published in accordance with Art. 153(4) EPC

(43) Date of publication:
**05.12.2012 Bulletin 2012/49**

(51) Int Cl.:
***H02M 3/155*** (2006.01)

(21) Application number: **11737209.4**

(22) Date of filing: **31.01.2011**

(86) International application number:
**PCT/JP2011/051971**

(87) International publication number:
**WO 2011/093500 (04.08.2011 Gazette 2011/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2010 JP 2010019833**

(71) Applicants:
• **Nagasaki University,
National University Corporation
Nagasaki-shi
Nagasaki 852-8131 (JP)**

• **Mitsubishi Electric Corporation
Tokyo 100-8310 (JP)**

(72) Inventors:
• **KUROKAWA Fujio
Nagasaki-shi
Nagasaki 852-8521 (JP)**
• **OSUGA Hiroyuki
Tokyo 100-8310 (JP)**

(74) Representative: **Viering, Jentschura & Partner
Grillparzerstrasse 14
81675 München (DE)**

(54) **CONTROL CIRCUIT AND CONTROL METHOD FOR POWER CONVERSION DEVICE**

(57) By adding a suppression amount for suppressing an overshoot or undershoot that attenuates with time during an overshoot or undershoot period, the overshoot or undershoot can be suppressed within a short time and the output can be made close to a normal value. When an output has overshot, an overshoot suppression amount including a time-dependent attenuation suppression amount is added to an output feedback control amount, the time-dependent attenuation suppression amount being defined in a period during which the output overshoots. Alternatively, when the output has undershot, an undershoot suppression amount including a time-dependent attenuation suppression amount is added to the output feedback control amount, the time-dependent attenuation suppression amount being defined in a period during which the output undershoots.

Fig. 2

EP 2 530 819 A1

**Description**

**FIELD OF THE INVENTION**

The present invention relates to a control circuit and control method for power conversion device which can inhibit overshoots (or undershoots) within a short time. In period when overshoot (or undershoot) occurs, timewise decrement quantity defined about each of overshoot (undershoot) is used for control.

**BACKGROUND ART**

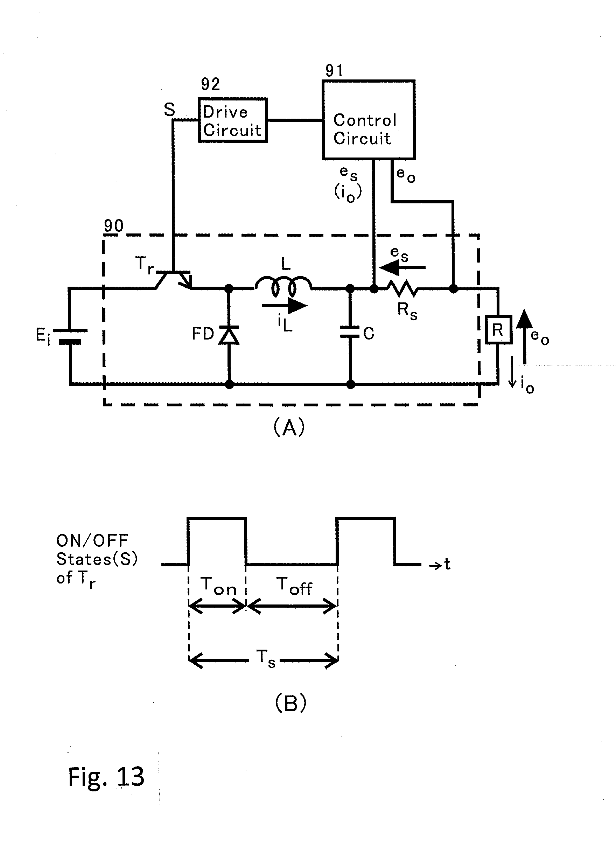

For example, output voltage value or an output current value may oscillate when state of system suddenly changed in a power conversion system. Operation can be stopped until influence of vibration disappears in a power conversion system that control was simplified. Also, in a power conversion system, it is usually executed feedback control to obtain stable output. For example, in a power converter of digital control type, power conversion control is performed by adjusting ON-time of a control switch. A control system of a switching power supply of FIG. 13 (A) consists of a control circuit (91) and a drive circuit (92). The control circuit (91) inputs values of output voltage ($e_o$) and output current ($i_o$) of a switching power supply (90). The control circuit (91) provides timing signal for ON-OFF switching of a transistor switch ($T_r$) based on said values in the drive circuit (92) as shown in FIG. 13 (B). The drive circuit (92) operates the transistor switch ($T_r$) based on timing signal input. The control circuit (91) of the switching power supply (90) of FIG. 13 (A) inputs a value of output voltage ($e_o$) and a value of output current ($i_o$) of the switching power supply (90). The control circuit (91) provides an ON-OFF timing signal of the transistor switch ($T_r$) based on the said values in the drive circuit 92 as shown in FIG. 13 (B).

As same as startup, the output voltage ($e_o$) may change greatly during operation. For example, the output changes when a load state changed or any disturbance occurred. The control circuit (91) usually performs PID control. When the output voltage ($e_o$) converges in desired value ($e_{o1}$)(or reference value), overshoot or undershoot appears in the output voltage ($e_o$).

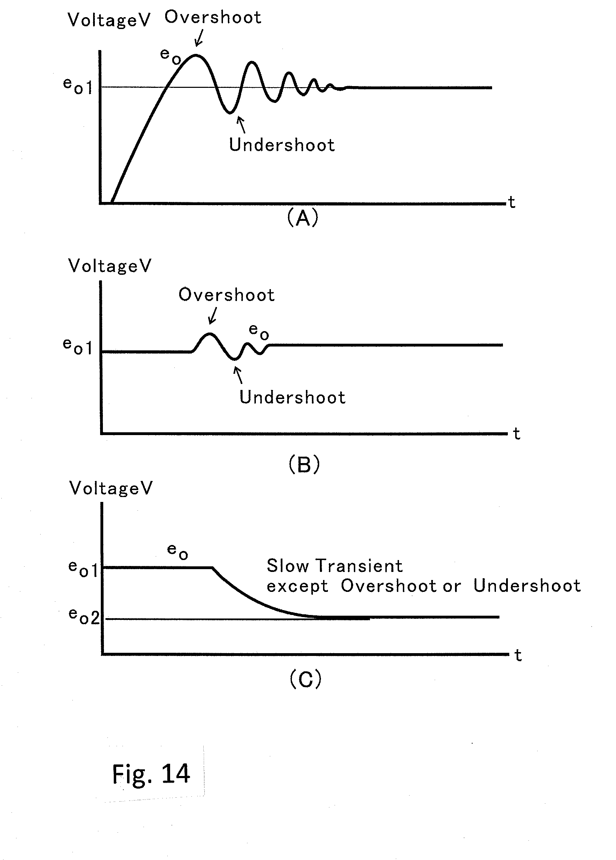

Also, the output voltage ($e_o$) may change small as shown in FIG. 14 (B). In this case, the control circuit (91) performs PID control. As shown in FIG. 14 (B) when output voltage ($e_o$) returns to desired value ($e_{o1}$) (or reference value), overshoot and undershoot appears in output voltage ($e_o$). Further, output voltage ($e_o$) may have slow transient response that does not reach overshoot and undershoot as shown in FIG. 14 (C).

In a power supply circuit used for driving of a microprocessor, it is necessary to make these overshoot and undershoot small. Thus, in the power supply circuit, an output voltage ($e_o$) must converge into a desired value ($e_{ref}$) within a short time.

**PRIOR ART DOCUMENTS**

**A PATENT DOCUMENT**

PATENT DOCUMENT 1: JP2005-198484

**SUMMARY OF THE INVENTION**

**A PROBLEM TO BE SOLVED BY THE INVENTION**

Conventionally, as shown in a patent document 1, a control method for inhibiting outbreak of overshoot is known. The control is performed by a series regulator connected to switching type DC-DC converter in parallel. However, problems of the control method are that circuit structure and control method are complicated. Therefore, a cost of manufacture becomes higher, and the size of the control circuit becomes large.

An object of the present invention is to inhibit overshoot (undershoot) within a short time by incorporating a timewise decrement inhibited variable defined about each of overshoot (undershoot) in overshoot inhibited variable (undershoot inhibited variable) in a period when overshoot (undershoot) occurs.

**A MEANS FOR SOLVING PROBLEM**

Subject matter of first control circuit of power conversion device of the present invention is (1)-(9).

(1)

A control circuit of power conversion device comprising of overshoot/undershoot detecting portion to detect overshoot or undershoot and overshoot/undershoot inhibited variable generator generating overshoot inhibited variable or undershoot inhibited variable, wherein

at the time when the overshoot/undershoot detecting element detects overshoot,

the overshoot/undershoot inhibited variable generator inhibits overshoot,

by overshoot inhibited variable which damps timewise at least in beginning of one overshoot period, or, by overshoot inhibited variable which includes timewise decrement inhibited variable which works timewise at least in beginning of one overshoot period,

or,

at the time when the overshoot/undershoot detecting element detects undershoot,

the overshoot/undershoot inhibited variable generator inhibits undershoot,

by undershoot inhibited variable which damps timewise at least in beginning of one undershoot period, or, by undershoot inhibited variable which includes timewise decrement inhibited variable which works timewise at least in beginning of one undershoot period.

For example, a control circuit of power conversion device of the present invention is used in restraint of response due to output variation. Further, a timewise decrement inhibited variable included in the overshoot inhibited variable may be determined in almost all of one overshoot period, and it may be determined in a part of one overshoot period. Also, a timewise decrement inhibit variable included in the undershoot inhibited variable may be determined in almost all of one undershoot period, and it may be determined in a part of one overshoot period. In the description , a part of one overshoot period includes short period of beginning of one overshoot period, a part of one undershoot period includes short period of beginning of one undershoot period.

In a power conversion device, it is assumed that PID control performs when overshoot does not occur. When an overshoot occurred, for example, an overshoot inhibit variable including timewise decrement inhibit variable is added to PID inhibited variable. When undershoot also occurred, an undershoot inhibit variable including timewise decrement inhibit variable is added to PID inhibited variable. Overshoot and undershoot are inhibited in a short time by above mentioned process. Further, an undershoot appearing after the overshoot is inhibited immediately, an overshoot appearing after the undershoot is inhibited immediately.

When overshoot and undershoot are repeated, overshoot inhibited variable and undershoot inhibited variable are added to feedback controlled signal at least two times sequentially. Alternatively, when undershoot and overshoot are repeated, undershoot inhibited variable and overshoot inhibited variable are added to feedback controlled signal at least two times, sequentially.

(2)

The control circuit of power conversion device according to (1), wherein

only in first overshoot, or only in overshoots and undershoots of earlier M times ("M" is an integer number larger than "2"), overshoot inhibited variable includes timewise decrement inhibited variable, or,

only in first undershoot, or only in undershoots and overshoots of earlier M times ("M" is an integer number larger than "2"), undershoot inhibited variable includes timewise decrement inhibited variable.

According to the present invention, if overshoot inhibited variable is included timewise decrement inhibited variable in first overshoot, undershoot and overshoot which occurs later are inhibited immediately. However, only by the inhibit control, inhibit of subsequent undershoot and overshoot may be insufficient. In this case, in subsequent undershoot, undershoot controlled variable can include timewise decrement controlled variable.

Similarly, usually, if undershoot inhibited variable is included timewise decrement inhibited variable in first undershoot, overshoot and undershoot which occurs later are inhibited immediately. However, only by the inhibit control, inhibit of subsequent overshoot and undershoot may be insufficient. In this case, in subsequent overshoot, overshoot inhibit variable can include timewise decrement inhibit variable.

(3)

A control circuit of power conversion device according to (1) or (2) which performs feedback control of output, said control circuit comprising, wherein

a feedback circuit which generates a feedback control signal so that output nears reference value,

a control signal addition portion which adds overshoot controlled variable or undershoot controlled variable to the feedback control signal that the feedback circuit generated and outputs addition control signal.

(4)

The control circuit of power conversion device described which generates PWM control signal in either from (3) to (3), wherein

the overshoot/undershoot controlled variable generation circuit attenuates ON-time value or OFF time value of the electric switch the PWM signal with sampling time course,

the ON-time value or off time value of the electric switch of the PWM signal with sampling passage of time, and generates the overshoot controlled variable or the undershoot controlled variable damping timewise.

(5)

The control circuit of power conversion device which is controlled by regulating ON-time of a power switch according to either from (1) to (4),wherein

the ON-time ($T_{ON,n}$) is represented in a sum with a time based on feedback control signal and a time based on the undershoot inhibited variable or the overshoot inhibited variable,

the time based on the undershoot inhibited variable or the overshoot inhibited variable is represented in $T_{OU,n}$

$$T_{ON,n} = T_{FB,n} + T_{OU,n}$$

$T_{ON,n}$: ON-time of the power switch
$T_{FB,n}$: time based on the feedback control signal
$T_{OU,n}$: time based on undershoot or overshoot inhibited variable

$$T_{OU,n} = T_{BIAS} + k_{c2} \cdot \Delta i_o \exp(k_{c1} \cdot n) + k_{v2} \cdot \Delta e_o \exp(k_{v1} \cdot n)$$

$T_{BIAS}$: fixed time
$e_o$: output voltage
$e_i$: input current
$k_{c1}$, $k_{c2}$, $k_{v1}$, $k_{v2}$: constant
n: numeric value

(6)

The control circuit of power conversion device according to either from (1) to (5), wherein
a control signal is output voltage, output current, output power or electric physical signal calculated based on the outputs (in the present invention, the electric physical signal is a resistance value, a capacitance value, an inductance value or an impedance value).

(7)

The control circuit of power conversion device according to either from (1) to (6), wherein
the overshoot inhibited variable or the undershoot inhibited variable is generated from at least one among input voltage, output voltage, output current, output power, electric physical signal calculated based on the outputs, current flowing power switch, electric reactor provided in output side of power conversion device, or electric capacitor provided in output side of power conversion device.

(8)

The control circuit of power conversion device according to either from (1) to (7), wherein
the overshoot inhibit variable or the undershoot inhibit variable damping timewise is exponential function, unit function or multistage step function, and is represented.

(9)

The control circuit of power conversion device according to either from (1) to (8), wherein

the overshoot/undershoot controlled variable generation circuitry works for independence with the feedback circuit, and the feedback circuit usually perform PID control, PD control, PI control, P control, a control using FIR filter, a control using IIR filter or Dead Beat control.

Subject matter of control method of power conversion device of the present invention is (10)-(15).

(10)

Control method of power conversion device which control circuit generates overshoot inhibited variable or undershoot inhibited variable by detecting overshoot or undershoot, wherein
at the time when the control circuit detect overshoot, the control circuit inhibits overshoot by overshoot controlled variable which damps in at least beginning of one overshoot beginning timewise or by overshoot controlled variable to include the timewise decrement controlled variable which at least acts in beginning of one overshoot beginning,
at the time when the control circuit detect undershoot, the control circuit inhibits undershoot by undershoot controlled variable which damps in at least beginning of one undershoot beginning timewise or by undershoot controlled variable to include the timewise decrement controlled variable which at least acts in beginning of one undershoot beginning.

For example, the control method of power conversion device of the present invention is used for inhibiting a response due to the output change. In the control method of power conversion device of the present invention, when overshoot and undershoot are repeated, overshoot inhibited variable and undershoot inhibited variable are added to feedback controlled signal at least two times sequentially. Alternatively, when undershoot and overshoot are repeated, undershoot inhibited variable and overshoot inhibited variable are added to feedback controlled signal at least two times, sequentially.

(11)

The control method of power conversion device according to (10), wherein
inhibit variable or includes above timewise decrement inhibit variable in above undershoot inhibit variable only in undershoot and the overshoot of the first undershoot or earliest M turn (the integer number that it has 2 or more M),
only in first overshoot, or only in overshoots and undershoots of earlier M times ("M" is an integer number larger than "2"), overshoot inhibited variable includes timewise decrement inhibited variable,
or,
only in first undershoot, or only in undershoots and overshoots of earlier M times ("M" is an integer number larger than "2"), undershoot inhibited variable includes timewise decrement inhibited variable.

(12)

The control method of power conversion device according to (11)(10), wherein
a control signal is output voltage, output current, output power or electric physical signal calculated based on the outputs.

(13)

The control method of the power conversion device according to either from (10) to (12), wherein
the overshoot inhibited variable or the undershoot inhibited variable is generated from at least one among input voltage, output voltage, output current, output power, electric physical signal calculated based on the outputs, current flowing power switch, electric reactor provided in output side of power conversion device, or electric capacitor provided in output side of power conversion device.

(14)

The control method of the power conversion device according to either from (10) to (13), wherein
the overshoot inhibit variable or the undershoot inhibit variable damping timewise is exponential function, unit function or multistage step function, and is represented.

(15)

The control method of the power conversion device according to either from (10) to (14), wherein
the overshoot/undershoot controlled variable generation circuitry works for independence with the feedback circuit.

Subject matter of second control circuit of power conversion device of the present invention is (16)-(20).

(16)

A control circuit of a power conversion device comprising of a transient detecting portion to detect transient except overshoot and undershoot, a transient inhibit variable generating portion rating transient inhibited variable, wherein at the time when the transient detecting portion detects a transient, the transient inhibit variable generating portion inhibits the transient by transient inhibited variable which damps timewise at least in beginning of the transient.

(17)

The control device of power conversion device according to (16), wherein a control signal is output voltage, output current, output power or electric physical signal calculated based on the outputs.

(18)

The control device of power conversion device according to (16), wherein the overshoot inhibited variable or the undershoot inhibited variable is generated from at least one among input voltage, output voltage, output current, output power, electric physical signal calculated based on the outputs, current flowing power switch, electric reactor provided in output side of power conversion device, or electric capacitor provided in output side of power conversion device.

(19)

The control device of power conversion device according to (16), wherein the overshoot inhibit variable or the undershoot inhibit variable damping timewise is exponential function, unit function or multistage step function, and is represented.

(20)

The control device of power conversion device according to (16), wherein the overshoot/undershoot controlled variable generation circuitry works for independence with the feedback circuit.

**EFFECT OF THE INVENTION**

According to the present invention, based on output voltage, an output current, output power or electrical physical quantity (in the present invention, it is specific at least one of resistance, capacitance, inductance or the impedance) derived by these, overshoot and undershoot are detected. Also, overshoot controlled quantity or undershoot controlled quantity can be generated from at least one of electrical physical quantity derived based on output voltage, output current, output power or these. According to the present invention, if overshoot occurs, for example, it can inhibit overshoot within a short time by including damping controlled quantity in overshoot controlled quantity timewise. The timewise decrement controlled quantity is defined in period when overshoot occurs by each overshoot. It can thereby plan the improvement of the control answer in a transient characteristic and the routine when load changed. According to the present invention, improvement of control response in transient characteristic and routine when load changed is performed.

**BRIEF DESCRIPTION OF DRAWINGS**

[FIG. 1]

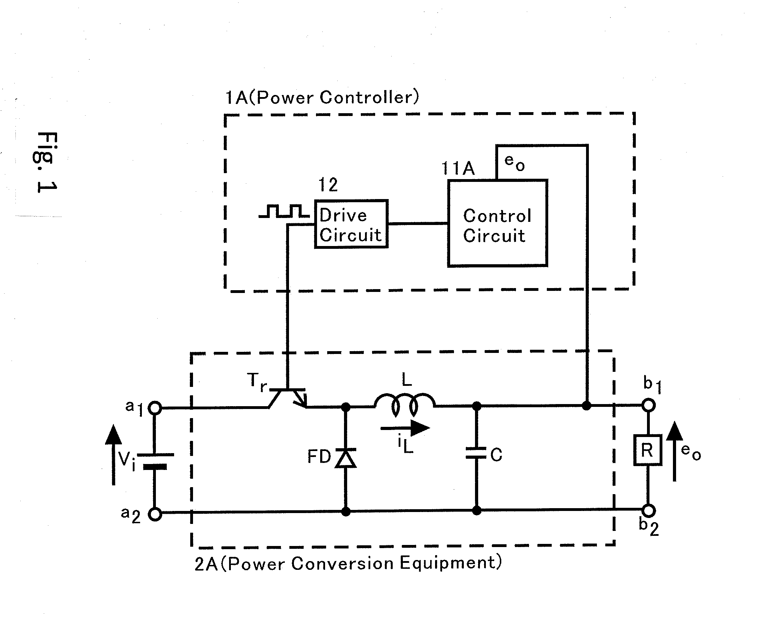

FIG. 1 is an illustration which shows one embodiment of a power controller of the present invention.
[FIG. 2]

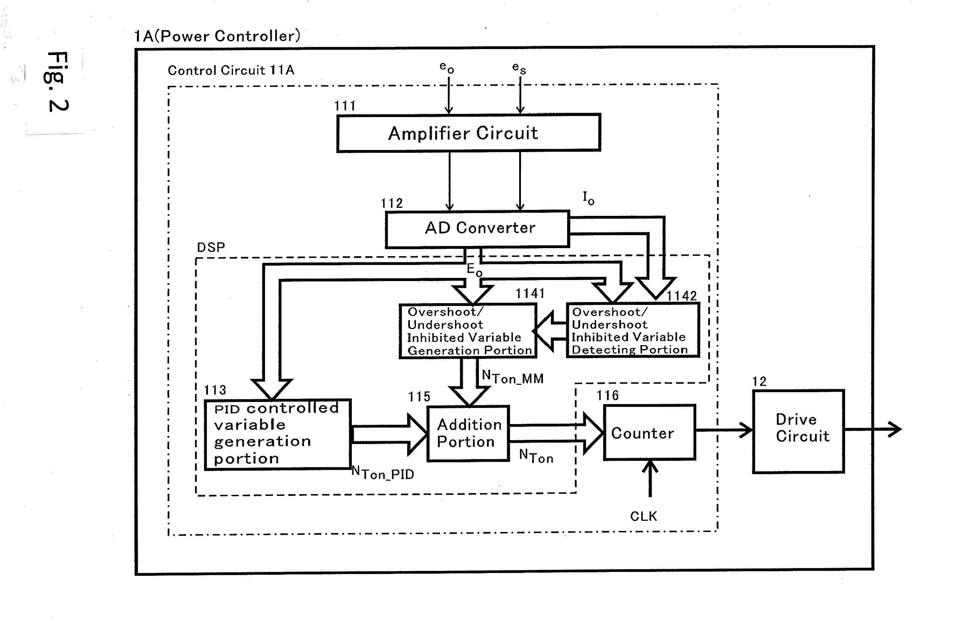

FIG. 2 is a functional block diagram which shows the power controller of FIG. 1.
[FIG. 3]

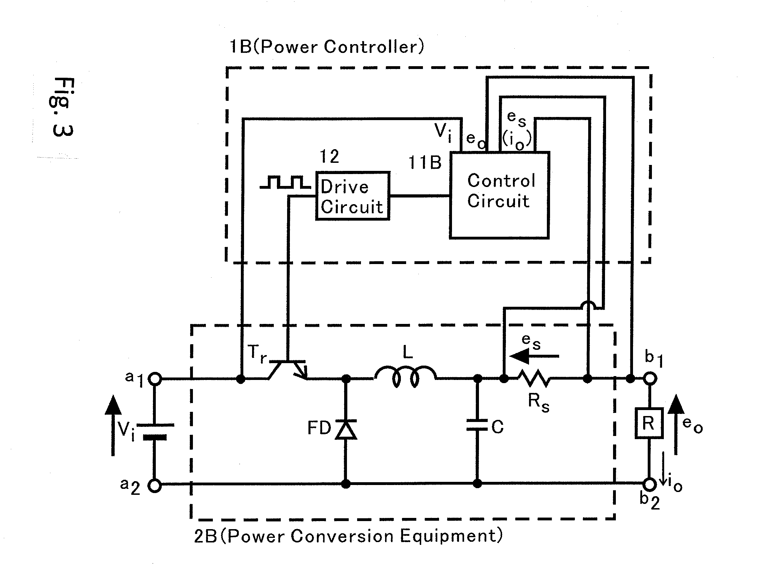

FIG. 3 is an illustration which shows other embodiments of a power controller of the present invention.
[FIG. 4]

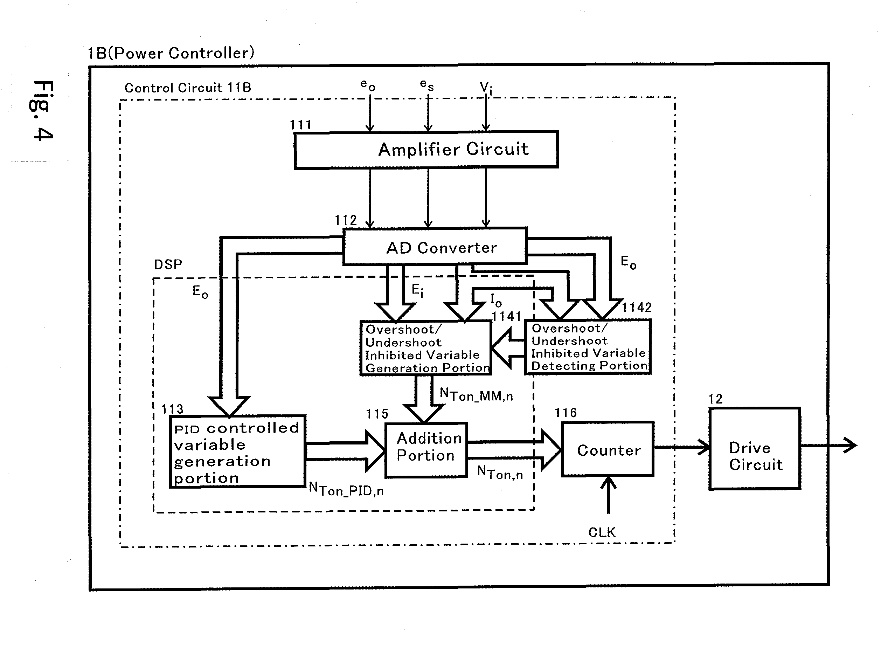

FIG. 4 is a functional block diagram which shows the power controller of FIG. 3.
[FIG. 5]

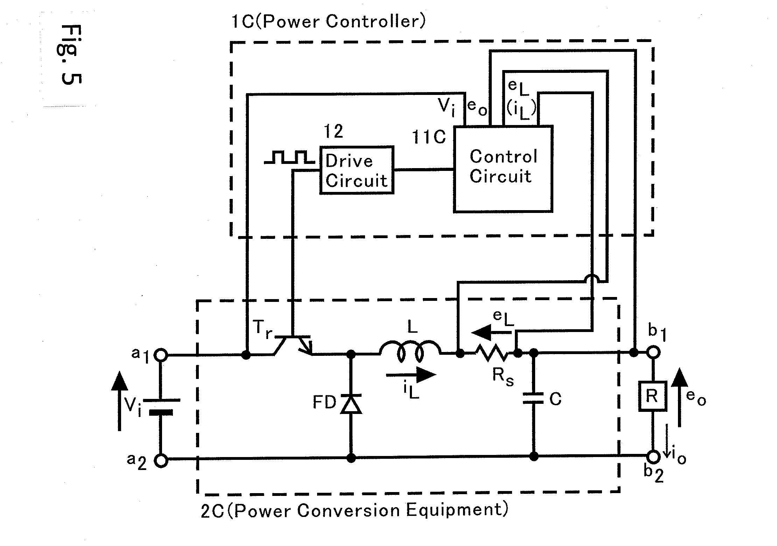

FIG. 5 is an illustration which shows a further other embodiment of a power controller of the present invention.

[FIG. 6]

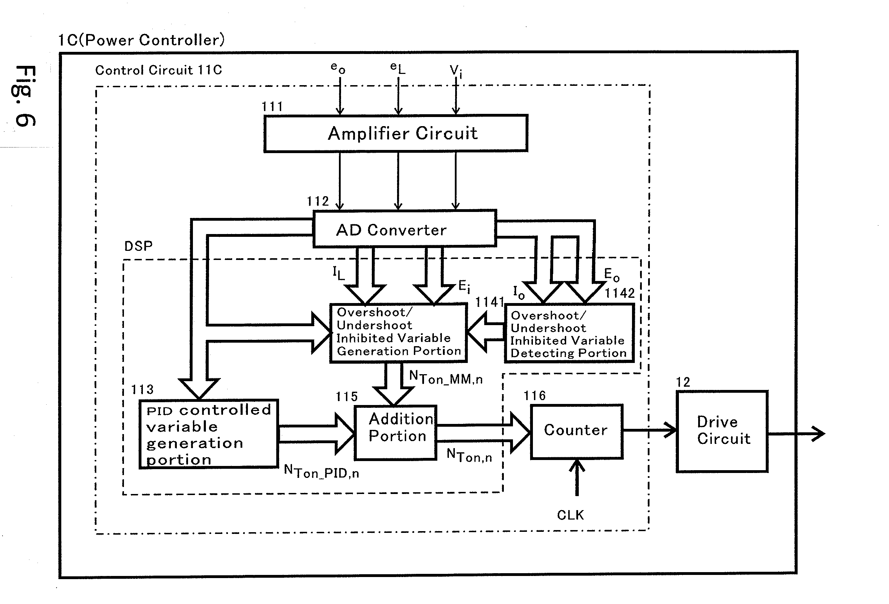

FIG. 6 is a functional block diagram which shows a power controller of FIG. 5.
[FIG. 7]

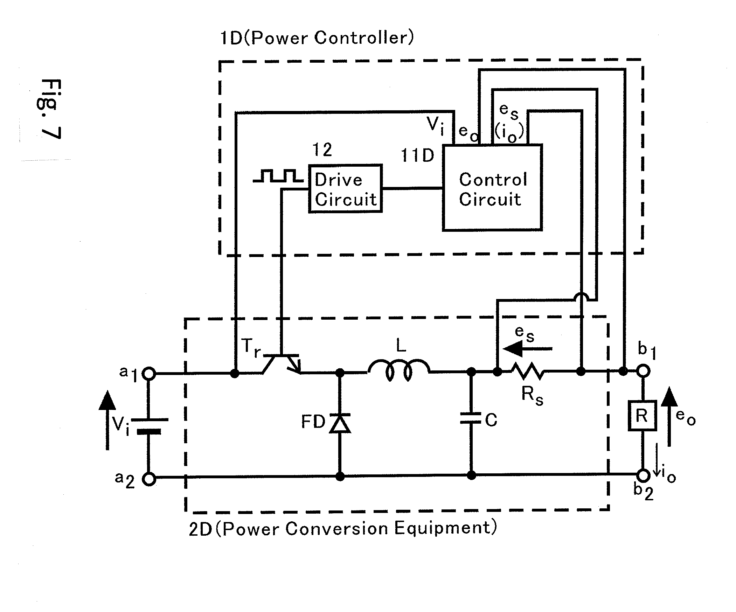

FIG. 7 is an illustration which shows a further other embodiment of a power controller of the present invention.
[FIG. 8]

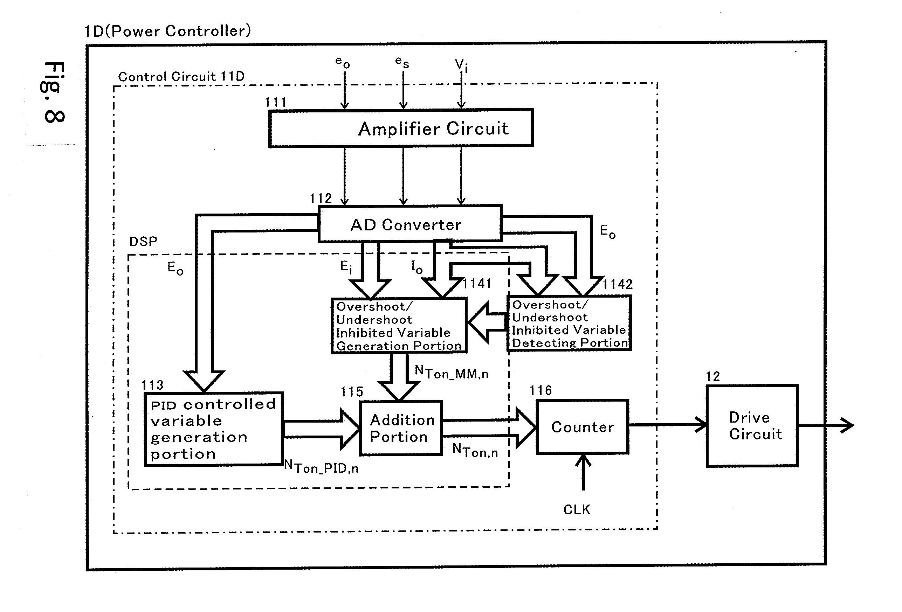

FIG. 8 is a functional block diagram which shows the power controller of FIG. 7.
[FIG. 9]

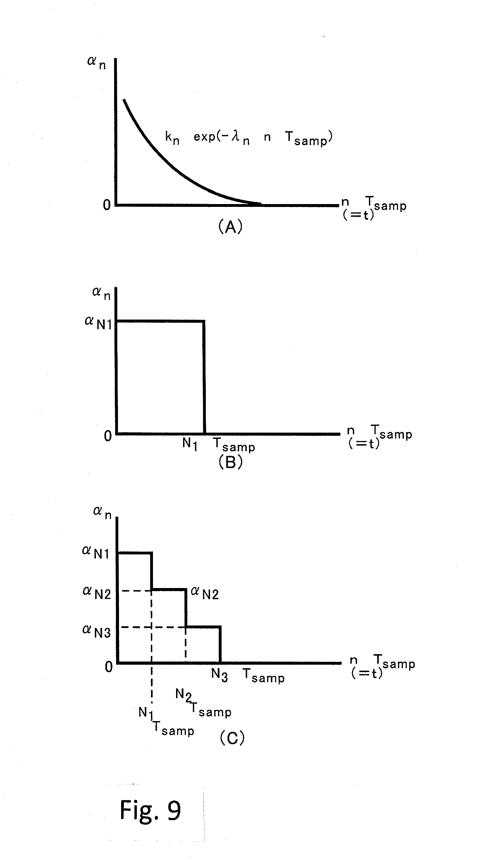

FIG. 9 is a graphic exemplifying addition controlled variable, (A) is a figure which shows a case using the exponential function as an addition controlled variable, (B) is a figure which shows a case using the unit function as addition controlled variable, and (C) is a figure which shows a case using a step function as an addition controlled variable.
[FIG. 10]

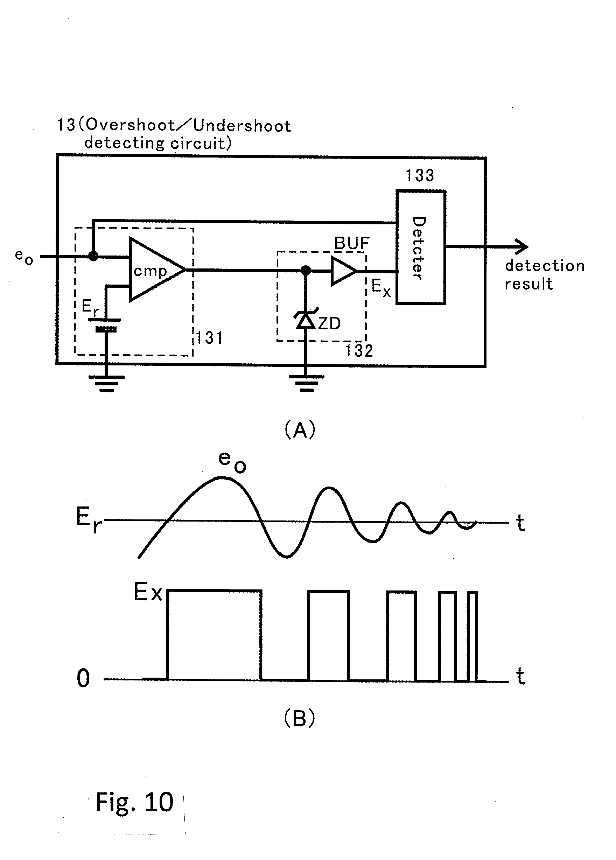

FIG. 10 (A) is a figure showing the overshoot/undershoot detecting circuit, and FIG. 10 (B) is a figure showing an operation of overshoot/undershoot detecting circuit.
[FIG. 11]

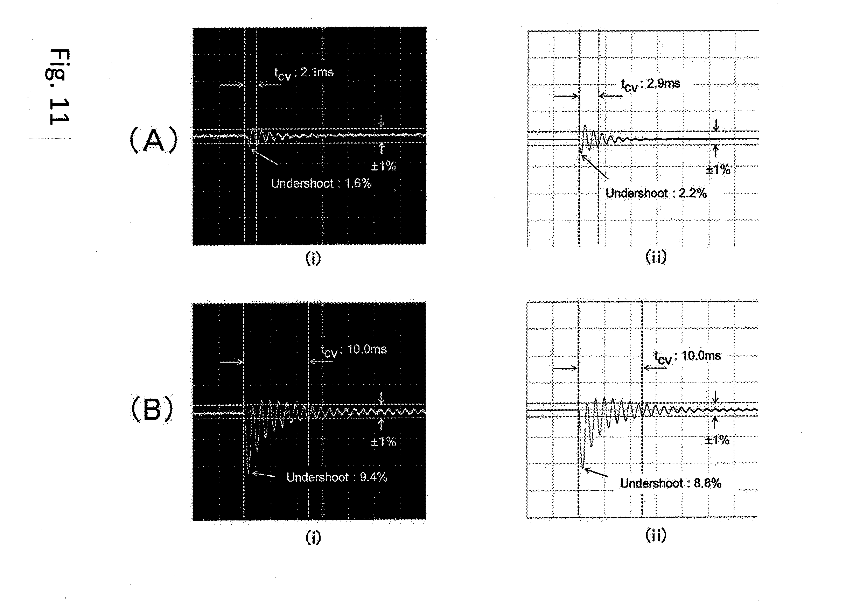

FIG. 11 is an explanatory drawing of effects by the present invention, (A) is a figure showing simulation value by control of the present invention and the actual value, an (B) is a figure showing simulation value by PID control and actual value.
[FIG. 12]

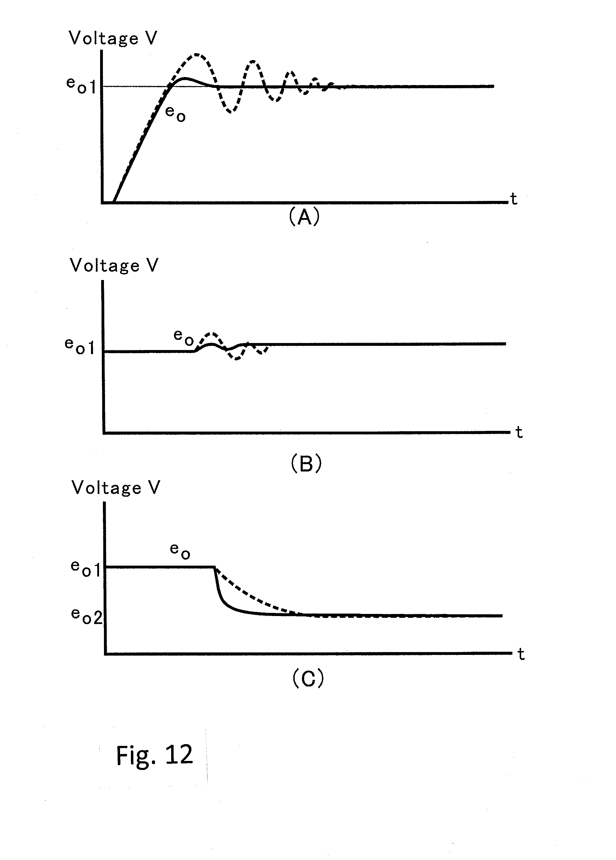

FIG. 12 shows illustrations of effect according to the present invention, (A) and (B) are figures showing the state that overshoot and undershoot occurring with voltage fluctuation are reduced, (C) is a figure showing states that time (period) when a voltage value converges in a predetermined value was shortened.
[FIG. 13]
FIG. 13 is an explanatory drawing of prior art, (A) is a figure showing switching power supply, and (B) is an illustration of ON-OFF control by a transistor switch.
[FIG. 14]
FIG. 14 (A) and (B) are waveform diagrams showing overshoot and undershoot which occur when voltage fluctuates, and (C) is a waveform chart showing moderate voltage variation of besides overshoot and undershoot (a case which a damping factor is small).

## CONFIGURATION TO CARRY OUT INVENTION

FIG. 1 is an illustration which shows an embodiment of a control circuit of a power conversion device of the present invention. A power conversion device (2A) is connected to a control circuit (11A), and the control circuit (11A) is connected to a drive circuit (12). The control circuit (11A) and the drive circuit (12) comprise a power controller (1A).

In FIG. 1, the power conversion device (2A) consists of a transistor switch ($T_r$) where one end was connected to in an the input terminal ($a_1$), a flywheel diode (FD) (a cathode is connected to another end of the transistor switch ($T_r$)) connected between another end of the transistor switch ($T_r$) and an input terminal ($a_2$) (gland), an electric reactor (L) where one end is connected to another end of the transistor switch ($T_r$), and another end is connected to an output terminal ($b_1$) and a capacitor (C) which was connected between the output terminals ($b_1$, $b_2$).

DC power supply is connected between the input terminals ($a_1$, $a_2$), and converted voltage appears between the output terminals ($b_1$, $b_2$). The DC voltage is shown in FIG. 1 by input voltage ($V_i$), and load (R) between the output terminals ($b_1$, $b_2$) is shown by direct current resistance of convenience. Note that, in FIG. 1, voltage (voltage of load R) between the output terminal ($b_1$, $b_2$) is represented in output voltage ($e_o$) (quantity of response). Also, in FIG. 1, the control circuit (11A) acquires output voltage ($e_o$).

FIG. 2 is a functional block diagram showing the power controller (1A) (the control circuit (11A) and the drive circuit (12)). In the present specification, a example that control circuits (11A, 11B, 11C, 11D) are comprised of digital circuit are shown as follows. A part or all of control circuit can be constructed by analog circuit. In FIG. 2, the control circuit (11A) consists of an amplifier circuit (111), an AD converter (112), a PID control quantity generation portion (113) (a feedback control portion in the present invention), an overshoot/undershoot inhibited variable generation portion (1141), an overshoot/undershoot detecting portion (1142), an addition portion (115), a counter (116) and an overshoot/undershoot detecting circuit (13). The PID control quantity generation portion (113), the overshoot/undershoot inhibited variable generation portion (1141), the overshoot/undershoot detecting portion (1142), and the addition portion (115) can be constructed by DSP (Digital Signal Processor).

In this embodiment, the PID control quantity generation portion (113) functions as a feedback control element generation portion, and the PID control quantity generation portion (113) generates PID control quantity ($N_{Ton\_PID}$) from digital values ($E_o$) of output voltage ($e_o$).

On the other hand, the overshoot/undershoot detecting portion (1142) detects overshoot or undershoot from output current ($I_o$) and output voltage ($E_o$). Io is digital value of ($i_o$), it is digital value of reduced voltage ($e_s$) too. When

the overshoot/undershoot detecting portion (1142) detects overshoot or undershoot, the overshoot/undershoot inhibited variable generation portion (1141) calculates input voltage rated value ($E^*_i$), output voltage rated value ($E^*_o$), and ON-time ($T_{on\_MM,n}$) of electric switch ($T_r$) based on an output voltage variation ($\Delta E_o$).

$$T_{on\_MM,n} = (T_s / E^*_i)\,(E^*_o + \alpha_{A,n} \times \Delta E_o) \qquad (1A)$$

$$\alpha_{A,n} = k_{A,n} \times \exp(-\lambda_{A,n} \times n \times T_{samp}) \qquad (1B)$$

$\alpha_{A,n}$: timewise decrement inhibited variable
$T_s$: ON-OFF period
$T_{samp}$: sampling period
$E^*_i$: input voltage rated value
$E^*_o$: output voltage rated value
$\Delta E_o$: variation of output voltage
$k_{A,n}$: constant to be fixed by n (it may be the constant that does not depend on n, commonly, negative value)
$\lambda_{A,n}$: constant to be fixed by n (it may be the constant that does not depend on n)
n: integer number
$T_{samp}$: sampling period

Output voltage rated value ($E^*_o$) may change further depending on value of input voltage ($E_i$) or output current ($I_o$). In this case, the control circuit (11A) input voltage ($E_i$), output current ($I_o$) other than output voltage ($E_o$). And a table to determine output voltage rated value ($E^*_o$) depending on values of input voltage ($E_i$) and output current Io is prepared. Output voltage rated value ($E^*_o$) is determined by this table. Further ON-time ($T_{on-MM,n}$) is equivalent in a value that multiplied period of the predetermined clock (CLK) by overshoot controlled variable ($N_{Ton\_MM,n}$).

An addition portion (115) adds output (PID control quantity ($N_{Ton\_PID,n}$)) of the PID control quantity generator (113) and output ($N_{Ton\_MM,n}$) of the overshoot/undershoot inhibited variable generation portion (1141). The addition portion (115) outputs an addition result to the counter (116) as PID control quantity $N_{Ton,n}$ ($N_{Ton,n} = N_{Ton\_MM,n} - N_{Ton\_PID,n}$). Note that ON-time ($T_{on,n}$) of the transistor switch (Tr) is equivalent to the value that multiplied period of the predetermined clock (CLK) by overshoot inhibited variable ($N_{Ton,n}$).

The counter (116) pre-sets value ($N_{Ton,n}$) and outputs carry signal to the drive circuit (12) when a number of the predetermined clock CLK reached the value ($N_{Ton,n}$). The drive circuit (12) turns on the transistor switch ($T_r$) in ON-OFF period ($T_s$). And the drive circuit (12) turns off the transistor switch ($T_r$) when it receives carry signal from the counter (116).

At the control circuit (11A) shown in FIGS. 1 and 2, ON-time ($T_{on\_MM,n}$) of the transistor switch ($T_r$) was calculated based on variation ($\Delta E_o$) of output voltage ($E_o$) (overshoot inhibited variable ($N_{Ton\_MM,n}$) was calculated). In the embodiment of FIG. 3, overshoot inhibited variable ($N_{Ton\_MM,n}$) can be calculated based on input voltage ($E_i$), output current ($I_o$) and variation ($\Delta I_o$) of output current ($I_o$). In the embodiment of FIG. 3, the control circuit (11B) is connected to a power conversion device (2B), and the control circuit (11B) is connected to the drive circuit (12). The control circuit (11B) and the drive circuit (12) comprise the power controller (1B).

Configuration of the power conversion device (2B) of FIG. 3 is same as configuration of the power conversion device (2A) of FIG. 1. However, resistance ($R_s$) for output current detection is connected between a connecting point and the output terminal (b1). The connecting point is a connecting point of the electric reactor (L) and the capacitor (C). Also, in FIG. 3, the control circuit (11B) inputs input voltage ($V_i$), reduced voltage ($e_s$) of output current ($i_o$) and output voltage ($e_o$).

FIG. 4 is a functional block diagram showing control circuit (11B). The configuration of control circuit (11B) of FIG. 4 is about same with configuration of the control circuit (11A) of FIG. 2. However, the amplifier circuit (111) inputs input voltage ($V_i$), reduced voltage $e_s$ of output current $i_o$ and output voltage ($e_o$). The AD converter (112) sends digital values ($E_o$) of output voltage ($e_o$) to the PID control quantity generator (113). Also, The AD converter (112) send digital values output current ($i_o$) to overshoot/undershoot detecting portion (1142). Even more particularly, The AD converter (112) sends digital value ($E_i$) of input voltage ($V_i$) and digital values ($I_o$) of reduced voltage ($e_s$) of output current ($i_o$) to the overshoot/undershoot inhibited variable generation portion (1141). In this embodiment, as shown in next formula ((2A), (2B)), overshoot inhibited variable ($N_{Ton\_MM,n}$) is calculated based on input voltage ($E_i$) and output current ($I_o$) and variation ($\Delta I_o$) of digital values ($I_o$).

$$T_{on\_MM,n}=(T_s/E_i)\{E^*_o+r\times(I_o+\alpha_{B,n}\times\Delta I_o)\} \qquad (2A)$$

$$\alpha_{B,n}=k_{B,n}\times\exp(-\lambda_{B,n}\times n\times T_{samp}) \qquad (2B)$$

$\alpha_{B,n}$: timewise decrement inhibited variable
$T_s$: ON-OFF period
$T_{samp}$: sampling period
$E_i$: input voltage
$E^*_o$: output voltage reference value
$I_o$: output current
$\Delta I_o$: variation of the output current
$k_{B,n}$: constant to be fixed by n (it may be the constant that does not depend on n, commonly, negative value).
$\lambda_{B,n}$: constant to be fixed by n (it may be the constant that does not depend on n)
n: integer number

**[0054]** The addition portion (115) of FIG. 4 adds output ($N_{Ton\_MM,n}$) of output (PID control quantity ($N_{Ton\_PID,n}$)) of the PID control quantity generator (113) and the overshoot/undershoot inhibited variable generation portion (1141) in the present embodiment. The addition portion (115) outputs addition value to the counter (116) as PID Controlled variable ($N_{Ton,n}$) ($N_{Ton,n}=N_{Ton\_MM,n}-N_{Ton\_PID,n}$).

As noted above, in the embodiment of FIG. 3, the control circuit (11B) performed control based on input voltage ($E_i$), output current ($I_o$) and variation ($\Delta I_o$) of output current ($I_o$). As shown in the power conversion device (2C) of FIG. 5 and the control circuit (11C) of FIG. 6, the control circuit (11B) may detect electric reactor current ($I_L$) replacing with detection of output current ($I_o$). In the embodiment of FIG. 5, the control circuit (11C) is connected to the power conversion device (2C), and the control circuit (11C) is connected to the drive circuit (12). The control circuit (11C) and the drive circuit (12) comprise a power controller (1C).

As for the configuration of the power conversion device (2B) in FIG. 5, a contour is the same as configuration of the power conversion device (2A) of FIG. 1. However, in the present embodiment, resistance ($R_{sL}$) for electric reactor current detection exchanges with resistance ($R_s$) for output current detection and is provided after an electric reactor. Inhibit response of overshoot and the undershoot becomes thereby fast.

Note that, in the electric reactor current discontinuous mode, it can use next formula((3A), (3B)).

$$T_{on\_MM,n}=N_{Ts}\times\{2E^*_{oL}(I_o+\alpha_{C,n}\times\Delta I_o)\}^{1/2}\times\{E_i(E_i-E^*_o)T_s\}^{-1/2} \qquad (3A)$$

$$\alpha_{C,n}=k_{C,n}\times\exp(-\lambda_{C,n}\times n\times T_{samp}) \qquad (3B)$$

$\alpha_{c,n}$: timewise decrement inhibit variable.
L: inductance of the electric reactor
$T_s$: ON-OFF period
$T_{samp}$: sampling period
$N_{Ts}$: clock number in ON-OFF period
$E_i$: input voltage
$E^*_o$: output voltage reference value
$I_o$: output current
$\Delta I_o$: variation of the output current
$k_{c,n}$: constant to be fixed by n (it may be the constant that does not depend on n, commonly, negative value)
$\lambda_{c,n}$: constant to be fixed by n (it may be the constant that does not depend on n)
n: integer number

**[0058]** Formula (3A), (3B) represent a state characteristic. When a state of the output fluctuated, based on this formula, undershoot inhibit variable is multiplied in the early days of the at least first undershoot by PID inhibited variable. Because it damps timewise, as for this undershoot inhibit variable, control without voltage fluctuation is carried out.

Even more particularly, as shown in power conversion device (2D) of FIG. 7 and the control circuit (11D) of FIG. 8, it can demand overshoot inhibit variable ($N_{Ton\_MM,n}$) based on input voltage ($E_i$) and output current ($I_o$), overshoot inhibit variable ($N_{Ton\_MM,n}$) can be calculated based on input voltage ($E_i$) and output current ($I_o$). In the embodiment of FIG. 7, the control circuit (11D) is connected to the power conversion device (3D), and the control circuit (11D) is connected to the drive circuit (12). The control circuit (11D) and the drive circuit (12) comprise a power controller (1D). In this embodiment, as shown in next formula ((4A), (4B)), overshoot inhibit variable ($N_{Ton\_MM,n}$) is calculated based on input voltage ($E_i$) and output current ($I_o$).

$$T_{on\_MM,n} = (T_s/E_i)\{E^*_o + r \times I_o \times (1 + \alpha_{D,n})\} \qquad (4A)$$

$$\alpha_{D,n} = k_{D,n} \times \exp(-\lambda_{D,n} \times n \times T_{samp}) \qquad (4B)$$

$\alpha_{D,n}$: timewise decrement inhibit variable
$T_s$: ON-OFF period
$T_{samp}$: sampling period
$E_i$: input voltage
$E^*_o$: output voltage reference value
$I_o$: output current
$k_{D,n}$: constant to be fixed by n (it may be the constant that does not depend on n, commonly, negative value)
$\lambda_{D,n}$: constant to be fixed by n (it may be the constant that does not depend on n)
n: integer number

[0061] The exponential function that it showed in FIG. 9 (A) as timewise decrement inhibit variable is used in each embodiment (formula (1A), (1B), formula (2A), (2B), formula (3A), (3B), formula (4A), (4B)). Vertical scale is a time axis ($n \times T_s = t$) and that horizontal scale is timewise decrement inhibit variable axis ($\alpha_n$) in FIG. 9 (A). In FIG. 9 (A), $\alpha_n$ is represented in $k_n \times \exp(-\lambda_n \times n \times T_{samp})$. As mentioned earlier, n is an integer number showing the order of the sampling. Ts is sampling period, and $k_n$ is constant to be fixed by n, but it may be the constant that it does not depend on n. According to the present invention, unit function as shown in FIG. 9 (B) can be used replacing with exponential function as shown in FIG. 9 (A) as timewise decrement inhibit variable. Also, the step function as shown in FIG. 9 (C) can be used, too. In unit function of FIG. 9 (B) and step function of FIG. 9 (C) horizontal scale is time axis ($n \times T_s = t$) and vertical scale is timewise decrement inhibit variable axis ($\alpha_n$). In the unit function of FIG. 9 (B), timewise decrement inhibit variable ($\alpha_n$) is "$\alpha_{N1}$" at the time of $0 \leqq n \leqq N_1$ ($0-N_1 \times T_s$). However, timewise decrement inhibit variable $\alpha^n$ becomes "0" when "n" is beyond "$N_1$". In step function of FIG. 9 (C), timewise decrement inhibit variable $\alpha_n$ is $\alpha_{N1}$ at the time of $0 \leqq n \leqq N_1$ ($0-N_1 \times T_s$). In ($N_1 \times T_s - N_2 \times T_s$), timewise decrement inhibit variable $\alpha_n$ is $\alpha_{N2}$ at the time of $N_1 \leqq n \leqq N_2$. In ($N_2 \times T_s - N_3 \times T_s$), timewise decrement inhibit variable $\alpha_n$ is $\alpha_{N3}$ at the time of $N_2 \leqq n \leqq N_3$.

Outbreak of timing of overshoot and undershoot may be known beforehand and may not be known. When outbreak timing of overshoot or the undershoot is not known, the overshoot/undershoot detecting circuit (13) as shown in FIG. 10 (A) is available.

In FIG. 10 (A), an overshoot/undershoot detecting circuit (13) is comprised of a comparator (cmp) (131) that reference voltage is DC voltage ($E_r$), a buffer circuit (132) and a distinction portion (133). The buffer circuit (132) consists of a Zener diode (ZD) of anodal earth and a buffer (BUF). The Zener diode (ZD) comprises between an output terminal of a comparator (31) and gland. The buffering (BUF) is connected between a cathode terminal of the Zener diode (ZD) and an input terminal of the overshoot/undershoot detecting circuit (3). The distinction portion (33) includes two input terminals. These input terminals input output voltage ($e_o$) and output voltage ($E_x$) of the buffer circuit (32). As shown in FIG. 10 (B), outbreaks of overshoot and undershoot are detected by comparing sign of these input signals (output voltage ($e_o$), output voltage ($E_x$)). Also, it is determined whether character of output ($e_o$) is falling or rising.

FIG. 11 (A), (B) are illustrations of the effects with the present invention. FIG. 11 (A) (i), (ii) show a simulation level by the control of the present invention and an actual value. FIG. 11(B) (i), (ii) show a simulation level by the PID control and an actual value. As is apparent from these figures, according to the present invention, it can suppress overshoot and the outbreak of the undershoot immediately.

In the embodiment, control circuit (11) acquired input voltage ($E_i$), reduced voltage ($e_s$) of the output current, value of output voltage ($e_o$), but the present invention is not limited to this. For example, control circuit (11) can take a plural number among input voltage ($E_i$), reduced voltage ($e_s$) of the output current, output voltage ($e_o$), input current ($I_i$), output power ($P_o$), load ($R$), inductor current ($i_L$), capacitor voltage ($e_c$), capacitor current ($i_c$), electric switch current ($i_{Tr}$). It operates these peaks, mean value, effective value, and control of the present invention is carried out.

Parameter ($k_{A,n}$, $\lambda_{A,n}$) of timewise decrement inhibit variable ($\alpha_{A,n}$) in the formula (1B), parameter ($k_{B,n}$, $\lambda_{B,n}$) of timewise decrement inhibit variable ($\alpha_{B,n}$) in the formula (2B), parameter ($k_{c,n}$, $\lambda_{c,n}$) of timewise decrement inhibit variable ($\alpha_{c,n}$) in the formula (3B) and parameter ($k_{D,n}$, $\lambda_{D,n}$) of timewise decrement inhibit variable ($\alpha_{D,n}$) in the formula (4B) are determined based on input voltage ($E_i$), output voltage $E_o$, output current ($I_o$), electric reactor current ($I_L$), load resistance (load impedance) or electric power ($P_o$). The greatest number of times of sampling represented by n in formula (1B), formula (2B), formula (3B), formula (4B) are determined based on input voltage ($E_i$), output voltage ($E_o$), output current ($I_o$), electric reactor current ($I_L$), load resistance (load impedance) or electric power ($P_o$).

FIG. 12 shows the illustration of effect according to the present invention, (A), (B) show the state that overshoot and undershoot are reduced. Large overshoot and undershoot originally occur when voltage fluctuates. (C) shows state that time to need that a voltage value converges to a predetermined price was shortened. As shown in these figures, it can inhibit overshoot and undershoot if it can depend on the present invention. Further, according to the present invention, to the transient characteristic except overshoot and the undershoot, it can implement prompt response. Note that, in the present invention, control technique of the transient state change is basically same as a control technique of overshoot and undershoot. Thus, it omits the description.

## EXPLANATIONS OF THE LETTERS OF NUMERALS

1A, 1B, 1C, 1D: power controller
2A, 2B, 2C, 2D: power conversion device
11A, 11B, 11C, 11D: control circuit
12: drive circuit
13: overshoot/undershoot detecting circuit
90: switching power supply
91: control circuit
92: drive circuit
111: amplifier circuit
112: AD converter
113: PID control variable generation element
115: addition portion
116: counter
131: comparator
132: buffer circuit
133: distinction portion
1141: overshoot/undershoot inhibit variable generator
1142: overshoot/undershoot detecting element
BUF: buffer
C: smoothing capacitor
CLK: reference clock
$E_i$: input voltage
$E_o$: output voltage
$E_r$: DC voltage
FD: flywheel diode
$I_i$: input current (digital values)
Io: output current (digital values)
L: filtering electric reactor
M: integer number to show which over/undershoot it is
$N_{Ei}$: digital values of input voltage Ei
$N_{Ton\_PID}$: PID inhibited variable
$N_{Ton-MM,n}$: overshoot inhibit variable
$N_{Ton}$: the number of the predetermined clock CLK
$N_{eo}$: digital values of the output voltage
$N_{es}$: digital values of the output current
R: load

$R_s$: resistance for output current detection

$T_r$: transistor switch

$T_{samp}$: sampling period

ZD: Zener diode

$a_1$, $a_2$: input terminal output terminal

$b_1$, $b_2$ output terminal

$e_c$: capacitor voltage

$e_o$: output voltage

$e_{ref}$: command

$e_s$: conversion voltage value of the output current

$i_L$: inductor current

$i_{Tr}$: Electric switch current

$i_c$: capacitor current

$i_o$: output current

kA,n, kB,n, kC,n, kD,n: constant (it may be the constant that does not depend on n., commonly, negative value) to be fixed by n

n: integer number to show whether it is the sampling of what joint $\lambda_{A,n}$, $\lambda_{B,n}$, $\lambda_{c,n}$, $\lambda_{D,n}$: constant (it may be the constant that does not depend on n) to be fixed by n

$\alpha_n$, $\alpha_{A,n}$, $\alpha_{B,n}$, $\alpha_{c,n}$, $\alpha_{D,n}$: timewise decrement inhibit variable

$\Delta E_o$: variation of the output voltage

$\Delta I_o$: variation of the output current

**Claims**

1. A control circuit of power conversion device comprising of overshoot/undershoot detecting portion to detect overshoot or undershoot and overshoot/undershoot inhibited variable generator generating overshoot inhibited variable or undershoot inhibited variable, wherein

   at the time when the overshoot/undershoot detecting element detects overshoot,

   the overshoot/undershoot inhibited variable generator inhibits overshoot,

   by overshoot inhibited variable which damps timewise at least in beginning of one overshoot period, or, by overshoot inhibited variable which includes timewise decrement inhibited variable which works timewise at least in beginning of one overshoot period,

   or,

   at the time when the overshoot/undershoot detecting element detects undershoot,

   the overshoot/undershoot inhibited variable generator inhibits undershoot,

   by undershoot inhibited variable which damps timewise at least in beginning of one undershoot period, or, by undershoot inhibited variable which includes timewise decrement inhibited variable which works timewise at least in beginning of one undershoot period.

2. The control circuit of power conversion device according to claim 1, wherein

   only in first overshoot, or only in overshoots and undershoots of earlier M times ("M" is an integer number larger than "2"), overshoot inhibited variable includes timewise decrement inhibited variable, or,

   only in first undershoot, or only in undershoots and overshoots of earlier M times ("M" is an integer number larger than "2"), undershoot inhibited variable includes timewise decrement inhibited variable.

3. A control circuit of power conversion device according to claim 1 or 2 which performs feedback control of output, wherein

   said control circuit comprising,

   a feedback circuit which generates a feedback control signal so that output nears reference value,

   a control signal addition portion which adds overshoot controlled variable or undershoot controlled variable to the feedback control signal that the feedback circuit generated and outputs addition control signal.

4. The control circuit of power conversion device described which generates PWM control signal in either from claim 1 to claim 3, wherein

   the overshoot/undershoot controlled variable generation circuit attenuates ON-time value or OFF time value of the electric switch the PWM signal with sampling time course,

   the ON-time value or off time value of the electric switch of the PWM signal with sampling passage of time, and generates the overshoot controlled variable or the undershoot controlled variable damping timewise.

**5.** The control circuit of power conversion device which is controlled by regulating ON-time of a power switch according to either from claim 1 to 4, wherein

the ON-time ($T_{ON,n}$) is represented in a sum with a time based on feedback control signal and a time based on the undershoot inhibited variable or the overshoot inhibited variable,

the time based on the undershoot inhibited variable or the overshoot inhibited variable is represented in $T_{OU,n}$

$$T_{ON,n} = T_{FB,n} + T_{OU,n}$$

$T_{ON,n}$: ON-time of the power switch
$T_{FB,n}$: time based on the feedback control signal
$T_{OU,n}$: time based on undershoot inhibited variable or overshoot inhibited variable

$$T_{OU,n} = T_{BIAS} + k_{c2} \cdot \Delta i_o \exp(k_{c1} \cdot n) + k_{v2} \cdot \Delta e_o \exp(k_{v1} \cdot n)$$

$T_{BIAS}$: fixed time
$e_o$: output voltage
$e_i$: Input current
$k_{c1}, k_{c2}, k_{v1}, k_{v2}$: constant
$n$: numeric value

**6.** The control circuit of power conversion device according to either from claim 1 to 5, wherein

a control signal is output voltage, output current, output power or electric physical signal calculated based on the outputs (in the present invention, the electric physical signal is a resistance value, a capacitance value, an inductance value or an impedance value).

**7.** The control circuit of power conversion device according to either from claim 1 to 6, wherein

the overshoot inhibited variable or the undershoot inhibited variable is generated from at least one among input voltage, output voltage, output current, output power, electric physical signal calculated based on the outputs, current flowing power switch, electric reactor provided in output side of power conversion device, or electric capacitor provided in output side of power conversion device.

**8.** The control circuit of power conversion device according to either from claim 1 to 7, wherein

the overshoot inhibit variable or the undershoot inhibit variable damping timewise is exponential function, unit function or multistage step function, and is represented.

**9.** The control circuit of power conversion device according to either from claim 1 to 8, wherein

the overshoot/undershoot controlled variable generation circuitry works for independence with the feedback circuit, and the feedback circuit usually perform PID control, PD control, PI control, P control, a control using FIR filter, a control using IIR filter or dead beat control.

**10.** Control method of power conversion device which control circuit generates overshoot inhibited variable or undershoot inhibited variable by detecting overshoot or undershoot, wherein

at the time when the control circuit detect overshoot, the control circuit inhibits overshoot by overshoot controlled variable which damps in at least beginning of one overshoot beginning timewise or by overshoot controlled variable to include the timewise decrement controlled variable which at least acts in beginning of one overshoot beginning,

at the time when the control circuit detect undershoot, the control circuit inhibits undershoot by undershoot controlled variable which damps in at least beginning of one undershoot beginning timewise or by undershoot controlled variable to include the timewise decrement controlled variable which at least acts in beginning of one undershoot beginning.

**11.** The control method of power conversion device according to claim 10, wherein

inhibit variable or includes above timewise decrement inhibit variable in above undershoot inhibit variable only in undershoot and the overshoot of the first undershoot or earliest M turn (the integer number that it has 2 or more M),

only in first overshoot, or only in overshoots and undershoots of earlier M times ("M" is an integer number larger than "2"), overshoot inhibited variable includes timewise decrement inhibited variable,

or,

only in first undershoot, or only in undershoots and overshoots of earlier M times ("M" is an integer number larger than "2"), undershoot inhibited variable includes timewise decrement inhibited variable.

12. The control method of power conversion device according to claim 10 or 11, wherein
a control signal is output voltage, output current, output power or electric physical signal calculated based on the outputs.

13. The control method of the power conversion device according to either from claim 10 to 12, wherein
the overshoot inhibited variable or the undershoot inhibited variable is generated from at least one among input voltage, output voltage, output current, output power, electric physical signal calculated based on the outputs, current flowing power switch, electric reactor provided in output side of power conversion device, or electric capacitor provided in output side of power conversion device.

14. The control method of the power conversion device according to either from claim 10 to 13, wherein
the overshoot inhibit variable or the undershoot inhibit variable damping timewise is exponential function, unit function or multistage step function, and is represented.

15. The control method of the power conversion device according to either from claim 10 to 14, wherein
the overshoot/undershoot controlled variable generation circuitry works for independence with the feedback circuit.

16. A control circuit of power conversion device comprising of a transient detecting portion to detect transient except overshoot and undershoot, a transient inhibit variable generating portion generating transient inhibited variable, wherein
at the time when the transient detecting portion detects a transient, the transient inhibit variable generating portion inhibits the transient by transient inhibited variable which damps timewise at least in beginning of the transient.

17. The control device of power conversion device according to claim 16, wherein
a control signal is output voltage, output current, output power or electric physical signal calculated based on the outputs.

18. The control device of power conversion device according to claim 16, wherein
the overshoot inhibited variable or the undershoot inhibited variable is generated from at least one among input voltage, output voltage, output current, output power, electric physical signal calculated based on the outputs, current flowing power switch, electric reactor provided in output side of power conversion device, or electric capacitor provided in output side of power conversion device.

19. The control device of power conversion device according to claim 16, wherein
the overshoot inhibit variable or the undershoot inhibit variable damping timewise is exponential function, unit function or multistage step function, and is represented.

20. The control device of power conversion device according to claim 16, wherein
the overshoot/undershoot controlled variable generation circuitry works for independence with the feedback circuit.

Fig. 1

# Fig. 2

Fig. 3

Fig. 4

Fig. 5

1C(Power Controller)

Control Circuit 11C

Fig. 6

Fig. 6

Fig. 7

Fig. 8

$$\alpha_n$$

$$k_n \ \exp(-\lambda_n \ n \ T_{samp})$$

$$n \ T_{samp} \ (=t)$$

(A)

$$\alpha_n$$

$$\alpha_{N1}$$

$$N_1 \ T_{samp}$$

$$n \ T_{samp} \ (=t)$$

(B)

$$\alpha_n$$

$$\alpha_{N1}$$

$$\alpha_{N2}$$

$$\alpha_{N2}$$

$$\alpha_{N3}$$

$$N_3 \ T_{samp}$$

$$n \ T_{samp} \ (=t)$$

$$N_1 \ T_{samp}$$

$$N_2 \ T_{samp}$$

(C)

# Fig. 9

13(Overshoot／Undershoot
   detecting circuit)

(A)

(B)

Fig. 10

Fig. 11

Voltage V

$e_{o}1$

$e_{o}$

t

(A)

Voltage V

$e_{o}1$

$e_{o}$

t

(B)

Voltage V

$e_{o}$

$e_{o}1$

$e_{o}2$

t

(C)

Fig. 12

(A)

(B)

Fig. 13

VoltageV Overshoot

$e_O$

$e_{o1}$

Undershoot

t

(A)

VoltageV

Overshoot

$e_O$

$e_{o1}$

Undershoot

t

(B)

VoltageV

$e_O$

$e_{o1}$

Slow Transient
except Overshoot or Undershoot

$e_{o2}$

t

(C)

Fig. 14

## INTERNATIONAL SEARCH REPORT

| International application No. |
| --- |
| PCT/JP2011/051971 |

**A. CLASSIFICATION OF SUBJECT MATTER**
*H02M3/155(2006.01)i*

According to International Patent Classification (IPC) or to both national classification and IPC

**B. FIELDS SEARCHED**

Minimum documentation searched (classification system followed by classification symbols)
H02M3/155

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 63-174563 A (Mitsubishi Electric Corp.), 19 July 1988 (19.07.1988), page 3, upper right column, line 5 to lower left column, line 9; fig. 1 to 3 (Family: none) | 1-20 |
| A | JP 2005-130616 A (Matsushita Electric Industrial Co., Ltd.), 19 May 2005 (19.05.2005), paragraphs [0047] to [0053]; fig. 1 to 4 (Family: none) | 1-20 |

☐ Further documents are listed in the continuation of Box C.   ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 24 March, 2011 (24.03.11) | 05 April, 2011 (05.04.11) |

| Name and mailing address of the ISA/<br>Japanese Patent Office | Authorized officer |
| --- | --- |
| Facsimile No. | Telephone No. |

Form PCT/ISA/210 (second sheet) (July 2009)

**REFERENCES CITED IN THE DESCRIPTION**

**Patent documents cited in the description**

- JP 2005198484 A